# EUROPÄISCHE PATENTANMELDUNG

(11) **EP 1 593 620 A1**
(43) Veröffentlichungstag der Anmeldung: **09.11.2005**
(21) Anmeldenummer: 04010722.9
(22) Anmeldetag: 05.05.2004
(51) Int. Cl.: B65G 47/14

(54) **Verfahren und Vorrichtung zum Entwirren von ineinander verhakten Formteilen**

(71) Anmelder: K. H. Schrod GmbH, 55494 Rheinböllen (DE)
(72) Erfinder: Schrod, Karl-Heinz, 55494 Rheinböllen (DE); Seibel, Dietmar, 55481 Kirchberg (DE); Wiegand, Wolfgang, 55494 Rheinböllen (DE)
(74) Vertreter: Quermann, Helmut

(57) **Zusammenfassung**

Die Erfindung betrifft ein Verfahren zum Entwirren von ineinander verhakten Formteilen (39), insbesondere Rohgusstellen, mit folgenden Merkmalen:
- Zuführen der Formteile in eine beidendig offene Tromme (29) durch eine der beiden Trommelöffnungen (27,28),
- Ausüben eines Impulses auf die Formteile in Achsrichtung und in Tangentialrichtung der Trommel durch Drehen der Trommel,
- Abfördern der Formteile aus der Trommel durch die andere der beiden Trommelöffnungen.

Eine Vorrichtung zum Entwirren von ineinander verhakten Formteilen weist eine beidseitig offene Trommel (29), einen Antrieb (30) zum Drehen der Trommel um eine Trommelachse, eine mit der Innenwand (35) der Trommel verbundene Förderschnecke (36) auf.

Ferner wird eine Anlage zum Zuführen von Formteilen von einem die Formteile regellos aufnehmenden Behältnis zu einer Weiterverarbeitungsstation vorgeschlagen.

## Beschreibung

Die Erfindung betrifft ein Verfahren und eine Vorrichtung zum Entwirren von ineinander verhakten Formteilen, insbesondere Rohgussteilen.

Formkomplizierte Rohgussteile werden dem Weiterverarbeiter oftmals als Schüttgut in Containern mit beispielsweise ca. 140 Stück angeliefert. Unter "formkompliziert" wird dabei verstanden: Gussteile mit beliebigen Aus- und Durchbrüchen, Kanten, beliebigen vorstehenden Ecken und Spitzen, die in die Ausbrüche anderer Teile passen. In den Containern liegen die Rohgussteile regellos, zum Teil miteinander verhakt.

Auf dem Markt befindliche Orientierungsapparaturen, wie Vibrationsförderer, haben für Gussteile bis zu 3 kg Stückgewicht den Nachteil der hohen Lautstärke, des geringen Platzbedarfs, der geringen Leistung aufgrund der Stückgewichte. Des weiteren sind solche Orientierungsapparaturen nicht geeignet, Verhakungseffekte zuverlässig aufzulösen.

Der Robotergriff "direkt in den Container" funktioniert nicht zuverlässig bei vertretbarem Aufwand wegen der Verhakungen der Teile.

Deshalb werden diese Aufgaben in der gussverarbeitenden Industrie auch heute noch manuell erledigt. Die entsprechende Bedienungsperson muss dabei in rauer Arbeitsumgebung bis zu 2700 Stück mit einem Stückgewicht von beispielsweise 2,5 kg, somit ein Gesamtgewicht von 6,7 t Arbeitsschicht im Schnitt aus Containern manuell entwirren, herausheben, durch Inaugenscheinnahme auf ungefähre Maßhaltigkeit prüfen und einzeln unter "Taktzeitstress" in Maschinen oder Transferstraßen punkt- und zeitgenau einlegen.

Aufgabe der Erfindung ist es, ein Verfahren und eine Vorrichtung anzugeben, das bzw. die es ermöglicht, regellos vorliegende, miteinander verhakte Formteile vereinzelt einer Weiterverarbeitungsstation zuzuführen. Dieses Vereinzeln der Formteile soll es ermöglichen, den Bearbeitungs- bzw. Verarbeitungsprozess vollautomatisch durchführen zu können.

Die Erfindung schlägt zunächst ein Verfahren zum Entwirren von ineinander verhakten Formteilen, insbesondere Rohgussteilen, mit folgenden Merkmalen vor:
- Zuführen der Formteile in eine beidendig offene Trommel durch eine der beiden Trommelöffnungen,
- Ausüben eines Impulses auf die Formteile in Achsrichtung und in Tangentialrichtung der Trommel durch Drehen der Trommel,
- Abfördern der Formteile aus der Trommel durch die andere der beiden Trommelöffnungen.

Mindestens zwei oder auch mehrere Formteile, die miteinander verwirrt sind, bilden eine Einheit. Vorzugsweise wird diese Einheit einzeln der Trommel zugeführt. Hierdurch ist sichergestellt, dass nicht unnötig viele Formteile während des Entwirrprozesses aufeinander einwirken, sondern nur auf diejenigen Formteile eingewirkt wird, die tatsächlich miteinander verhakt sind. Erkannt wird die aus Formteilen gebildete jeweilige Einheit beispielsweise mittels einer Optik, die ein Zuführen der folgenden Einheit miteinander verhakter Formteile zur Trommel erst dann zulässt, wenn die Formteile der zuvor der Trommel zugeführten Einheit bereits entwirrt sind und insbesondere aus der Trommel abgefördert worden sind. Die in der Trommel entwirrten und insbesondere vereinzelten Formteile können dann der Weiterverarbeitungsstation zugeführt werden. Dies erfolgt beispielsweise dadurch, dass das jeweilige Formteil bezüglich seiner Position in einem Kamerafeld erfasst wird und die erfassten Daten einem Roboter übermittelt werden, der dieses Formteil exakt greift und der Weiterverarbeitungsstation zuführt. Der Begriff der Weiterverarbeitungsstation ist umfassend zu verstehen; er bezieht sich nicht nur auf die Verarbeitungsstation als solche, sondern auch auf Maschinenelemente, die dieser Station vorgeschaltet sind, beispielsweise ein Förderband oder ein Werkstückträger zur Aufnahme des Formteils.

Das eigentliche Entwirren der ineinander verhakten Formteile in der Trommel erfolgt durch das Ausüben des Impulses auf die Formteile in Achsrichtung und in Tangentialrichtung der Trommel durch Drehen der Trommel. Der Impuls kann durch unterschiedliche bauliche Gestaltung der Trommel erzielt werden. Wichtig ist, dass die Formteile einerseits in Tangentialrichtung der Trommel bewegt werden und damit an der Trommelinnenwand anliegend etwas angehoben werden, bis sie, in aller Regel kurz vor Erreichen der vertikalen Ausrichtung der Trommelinnenwand kippend nach unten fallen und damit eine andere Position einnehmen, in der sie nicht mehr mit einem anderen Formteil verhakt sind.. Wichtig ist ferner das Ausüben des Impulses in Achsrichtung der Trommel. Dies führt dazu, dass die Formteile durch den Innenraum der Trommel hindurchbewegt werden, von der einen Trommelöffnung zur anderen Trommelöffnung.

Die Formteile werden somit innerhalb der Trommel entwirrt, unter Umständen sogar vereinzelt aus der Trommel ausgegeben werden.

Die Trommel kann unterschiedliche Bewegungen vollführen, um den Entwirreffekt zu erzielen. Es wird als vorteilhaft angesehen, wenn die Trommel um eine die beiden Öffnungen der Trommel durchsetzende Achse, insbesondere eine rotationssymmetrische Achse der Trommel, gedreht wird. In dem letztgenannten Sonderfall ist die Trommel rotationssymmetrisch ausgebildet und es wird die Trommel um diese Achse gedreht. Vorteilhaft beträgt die Drehzahl der Trommel fünf bis zwanzig Umdrehungen pro Minute. Es handelt sich somit um ein relativ langsames Drehen der Trommel. Unter dem Aspekt der Automatisierung des Entwirrvorganges wird es als vorteilhaft angesehen, wenn die Formteile mittels eines ersten Förderbandes der Trommel zugeführt und/oder mittels eines zweiten Förderbandes aus der Trommel abgeführt werden.

Von großem Vorteil ist es, wenn die Formteile in der Trommel vom höheren Aufgabeniveau der Trommel auf ein niedrigeres Ausgabeniveau der Trommel gefördert werden. Die Neigung der Trommel zur Horizontalen beträgt beispielsweise 5 bis 15°, insbesondere 10°. Durch diese Neigung der Trommelachse wird der Effekt der Förderung der Formteile durch die Trommel hindurch unterstützt.

Das beschriebene Verfahren ermöglicht das Entwirren und damit Umwandeln eines einer Einheit bildenden Haufens von Formteilen, insbesondere Rohgussteilen in eine hinter- oder nebeneinander liegende Schar von einzelnen Formteilen.

Die Aufgabe wird ferner durch eine Vorrichtung zum Entwirren von ineinander verhakten Formteilen, insbesondere Rohgussteilen, mit folgenden Merkmalen gelöst:
- einer beidseitig offenen Trommel,
- einem Antrieb zum Drehen der Trommel um eine Trommelachse,
- eine mit der Innenwand der Trommel verbundenen Förderschnecke mit Förderrichtung von einer der beiden Trommelöffnungen zu der anderen der beiden Trommelöffnungen.

Bei dieser erfindungsgemäßen Vorrichtung wird somit der Impuls auf die Formteile mittels der Förderschnecke ausgeübt. In einfachster Art und Weise handelt es sich bei dieser um mindestens einen wendelartig mit der Innenwand der Trommel verbundenen Steg, der senkrecht zur Innenwand der Trommel in deren Innenraum hineinsteht. Die Höhe des Steges, gemessen in der Erstreckung des Steges senkrecht zur Innenwand der Trommel ist entsprechend der Größe des Formteils bemessen. Dies bedeutet, dass die Steghöhe bezogen auf die Abmessung des Formteils relativ gering ist, weil dem wendelförmig angeordneten Steg primär die Aufgabe zukommt, auf die Einheit von Formteilen innerhalb der Trommel bzw. die Formteile in Achsrichtung und Tangentialrichtung der Trommel einzuwirken, so dass die Formteile durch die Trommel geschoben und hierbei auf ein höheres Niveau innerhalb der Trommel bewegt werden, bis sie überkippen und wieder nach unten fallen.

Ein besonders einfacher Aufbau der Trommel ergibt sich, wenn diese rotationssymmetrisch ausgebildet ist. Insbesondere weist die Trommel über ihre Länge einen konstanten Durchmesser auf.

Es ist insbesondere daran gedacht, dass die Drehachse der Trommel mit der rotationssymmetrischen Achse der Trommel zusammenfällt.

Unter dem Gesichtspunkt der zwangsläufigen, optimierten Förderung der Formteile durch die Trommel ist vorgesehen, dass der jeweils unten befindliche, zwischen den Trommelöffnungen angeordnete Innenwandbereich der Trommel zur Horizontalen geneigt ist. Bei einer rotationssymmetrischen Ausbildung der Trommel, die im übrigen über ihre Länge einen konstanten Durchmesser aufweist, entspricht diese Neigung der Neigung der Rotationsachse. Diese Neigung beträgt vorzugsweise 5 bis 15°, insbesondere 10° nach unten zur Horizontalen, gesehen von der Trommelöffnung, durch die die Formteile in die Trommel eingegeben werden.

Die Förderschnecke kann unterschiedlich gestaltet sein. Es wird als völlig ausreichend angesehen, wenn die Förderschnecke eingängig ist. Es ist somit nur ein einziger wendelförmig angeordneter Steg mit der Innenwandung der Trommel verbunden. Grundsätzlich könnte die Förderschnecke aber auch mehrgängig sein.

Insbesondere bei einer eingängigen Förderschnecke wird es als vorteilhaft angesehen, wenn sich der Gang der Förderschnecke über einen Winkel von 720° bis 1800°, vorzugsweise 1080° bis 1440°, insbesondere 1260° erstreckt. Dies entspricht einer Erstreckung des Ganges über einen Winkel von 2 bis 5 Vollkreisen, vorzugsweise 3 bis 4 Vollkreisen, insbesondere 3,5 Vollkreisen.

In aller Regel wird die Trommel aus Metall bestehen. Aus Gründen der Geräuschoptimierung wird es als vorteilhaft angesehen, wenn die Trommel im Bereich der Innenwand mit einer Auskleidung, insbesondere einer geräuschdämpfenden Auskleidung versehen ist. Es kann sich hierbei um eine mit der Innenwand verbundene Kunststoffmatte handeln. Selbstverständlich ragt die Förderschnecke über diese Auskleidung heraus, da für die Funktion der Vorrichtung sichergestellt sein muss, dass die Förderschnecke in Kontakt mit den Formteilen gelangen kann.

Benachbart der einen Trommelöffnung ist zweckmäßig ein erstes Förderband und benachbart der anderen Trommelöffnung zweckmäßig ein zweites Förderband angeordnet. Die Formteile werden somit mittels der Förderbänder in die Trommel eingegeben bzw. von der Trommel, nachdem sie aus dieser herausgefallen sind, abgefördert.

Das erfindungsgemäße Verfahren und die beschriebene Vorrichtung sind insbesondere im Zusammenhang mit einer Anlage zum Zuführen von Formteilen, insbesondere Rohgussteilen, von einem die Formteile regellos aufnehmenden Behältnis zu einer Weiterverarbeitungsstation zu sehen. Diese weist folgende Merkmale auf:
- Das Behältnis zur Aufnahme der regellos vorhandenen Formteile,
- Fördermittel zum Aufnehmen von aus dem Behältnis ausgegebenen Formteilen und zum Übergeben dieser Formteile zu einer Entwirrstation zwecks Entwirren von miteinander verhakten Formteilen,
- Fördermitteln zum Übernehmen der aus der Entwirrstation ausgegebenen entwirrten Formteile und Zuführung dieser Formteile zur Weiterverarbeitungsstation.

In vorbeschriebenen Sinne ist insbesondere ein Roboter zum Zuführen des jeweils vereinzelten Formteils zur Weiterverarbeitungsstation vorgesehen.

Diese Anlage ermöglicht eine dosierte Ausschüttung des Containerinhalts/Behälterinhalts auf ein geeignetes Fördermedium. Es können regel- und bestimmbare Volumina, d.h. Haufen von Formteilen, in denen die Teile in X, Y, Z Koordinaten dreidimensional vorliegen, in die Entwirrstation eingebracht werden. Die Entwirrstation dient der Auflösung der Verhakung und Bereitstellung aller Teile in beliebigen X, Y-Lagen auf einem zweiten Fördermedium. Es ist eine opto-elektronische Erkennung und Vermessung der Formteile/Werkstücke auf laufendem Fördermedium möglich. Das Fördermedium kann auch zum Stillstand gebracht werden, wenn mehrere greifbare Teile, die in Ordnung sind, die somit entwirrt sind, im Greifbereich des Roboters liegen. Es werden die als richtig erkannten Teile von einem Roboter, insbesondere einem sechsachsigen Roboter abgegriffen und beispielsweise über eine Wendestation in die Weiterverarbeitungsmaschine bzw. Transferstraße eingelegt. Erkannte Formteile, die nicht in Ordnung sind, die somit nicht entwirrt werden konnten, müssen aussortiert werden. Nicht greifbare Formteile werden in den Bereich unmittelbar hinter der Entwirrstation zurückgefördert und durchlaufen den Zyklus noch einmal. Alle Baugruppen sind insbesondere untereinander interdependent gesteuert.

Die Erfindung schlägt somit ein Verfahren und eine Vorrichtung vor, gemäß dem bzw. der ein einfaches und zuverlässiges Entwirren von Formteilen möglich ist. Ein Umrüsten der Anlage kann, sofern dies überhaupt erforderlich ist, innerhalb kürzester Zeit erfolgen. Der Prozess, ausgehend vom Ausgeben der Formteile aus dem Behälter bis zum Zuführen der einzelnen Formteile zur Weiterverarbeitungsstation kann vollautomatisch vonstatten gehen.

Weitere Merkmale der Erfindung sind in den Unteransprüchen, der Beschreibung der Figuren und den Figuren selbst dargestellt, wobei bemerkt wird, dass alle Merkmale und Einzelmerkmale erfindungswesentlich sind.

In den Figuren ist die Erfindung anhand eines Ausführungsbeispieles dargestellt, ohne hierauf beschränkt zu sein. Es zeigt:
- Figur 1.: eine schematische Darstellung der Anlage zum Zuführen von Formteilen von einem Behältnis zu einer Weiterverarbeitungsstation,
- Figur 2: die Bestandteil der Anlage bildende Entwirrstation mit zuförderndem Förderband und abförderndem Förderband, in einer räumlichen Darstellung gesehen,
- Figur 3: die Anordnung gemäß Figur 2 in Blickrichtung gemäß Pfeil III,
- Figur 4: die Anordnung gemäß der Figuren 2 und 3 in einer räumlichen Rückansicht,
- Figur 5: eine Draufsicht der Entwirrstation,
- Figur 6: einen Schnitt durch die Entwirrstation gemäß der Linie VI-VI in Figur 5,
- Figur 7: einen Schnitt durch die Entwirrstation gemäß der Linie VII-VII in Figur 6,
- Figur 8: eine räumliche Ansicht der Entwirrstation, schräg von hinten gesehen,
- Figur 9: eine räumliche Ansicht der in Figur 8 gezeigten Entwirrstation, die etwa auf halber Länge der Trommel im wesentlichen vertikal geschnitten ist,
- Figur 10: eine räumliche Ansicht eines Formteiles, das als Rohguss-Bremsengehäuse ausgebildet ist,
- Figur 11: eine Ansicht des Bremsengehäuses in Blickrichtung des Pfeiles XI in Figur 10,
- Figuren 12 bis 15: unterschiedliche Ansichten zweier miteinander verhakter Bremsengehäuse, die eine Einheit bilden.

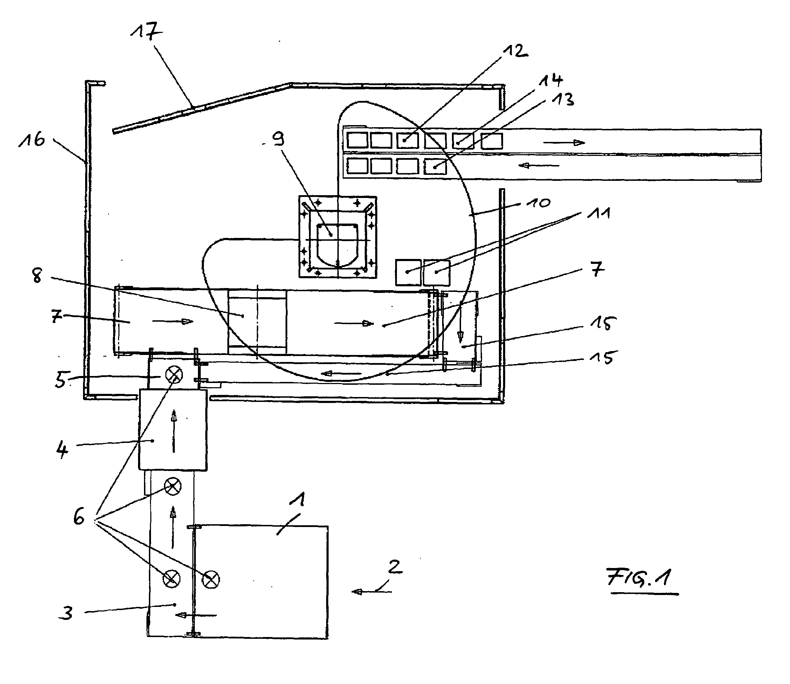

Figur 1 veranschaulicht in vereinfachter Darstellung die Anlage zum Zuführen von Formteilen, insbesondere der Rohguss-Bremsengehäuse, von einem die Formteile regellos aufnehmenden Behältnis zu einer Weiterverarbeitungsstation. Das nicht näher veranschaulichte Behältnis, ein Container, ist auf einem Container-Hebegerät 1 platziert. Die Beschickungsrichtung der Beschickung mit den Rohwarencontainern ist durch den Pfeil 2 veranschaulicht. Mittels des Container-Hebegeräts 1 wird der Container nicht nur gehoben, sondern kann auch gekippt werden, so dass die Formteile aus dem Container auf ein Zuführ-förderband 3 ausgeschüttet werden können. Der Container wird immer nur so weit gekippt, dass eine oder wenige Einheiten miteinander verhakter Formteile auf das Förderband 3 ausgegeben werden. Dieses Förderband 3 führt zur Entwirrstation 4 und fördert somit die Einheit von Formteilen zu dieser. In der Entwirrstation 4 werden zumindest die ineinander hakenden Formteile gelöst und insbesondere vereinzelt aus der Entwirrstation 4 auf ein Abführ-Förderband 5 ausgegeben. Die Fließrichtung der Formteile ist mit Pfeilen veranschaulicht.

Dem Hebegerät 1 sowie den Förderbändern 3 und 4 sind Einrichtungen 6 umfassend Endschalter/Lichtschranken zur Steuerung des Materialflusses, somit zur Steuerung des Flusses der Formteile bzw. der Einheiten von Formteilen zugeordnet. Hierdurch wird erreicht, dass Einheiten von Formteilen sich nicht vor der Entwirrstation 4 stauen bzw. die entwirrten Formteile definiert von der Entwirrstation abgefördert werden.

An das Abführ-Förderband 5 schließt sich ein weiteres auf tieferem Niveau angeordnetes Förderband 7 an. Die Höhendifferenz stellt sicher, dass enthakte Formteile sich spätestens beim Passieren dieses Höhensprungs vereinzeln, da diese Formteile nacheinander nach unten fallen. Im Bereich des Förderbandes 7 werden die vereinzelten Formteile zunächst einem Kamerafeld 8 zugeführt werden, um so die genaue Position und Lage des Formteils zu erkennen und diese Information an die Steuerung eines Sechs-Achsen-Roboters 9 weiter zu geben, der die Aufgabe hat, das Formteil zu erfassen und es der Weiterverarbeitungsstation zuzuführen. Der sich über einen Dreiviertelkreis erstreckende Arbeitsbereich 10 des Roboters 9 ist mit veranschaulicht. Das jeweilige vom Roboter 9 abgegriffene Formteil wird entweder über eine Wendestation 11 in die Weiterverarbeitungsstation eingelegt oder aber im Bereich einer Ladestation 12 in einen Werkstücksträger eingelegt. Die zugeförderten leeren Werkstückträger sind mit der Bezugsziffer 13, die mit den Rohgussteilen beladenen Werkstückträger mit der Bezugsziffer 14 bezeichnet.

Sollten trotz der optischen Erfassung der Formteile im Bereich des Kamerafelds 8 Formteile nicht vom Roboter 9 ergriffen werden können, werden diese nicht greifbaren Teile über zwei Rückführbänder 15 und 16 zurückgefördert und durchlaufen den Zyklus hinter der Entwirrstation 4 nochmals. Der Bereich um den Roboter 9 ist durch einen Sicherheitszaun 16 und eine Tür 17 gesichert.

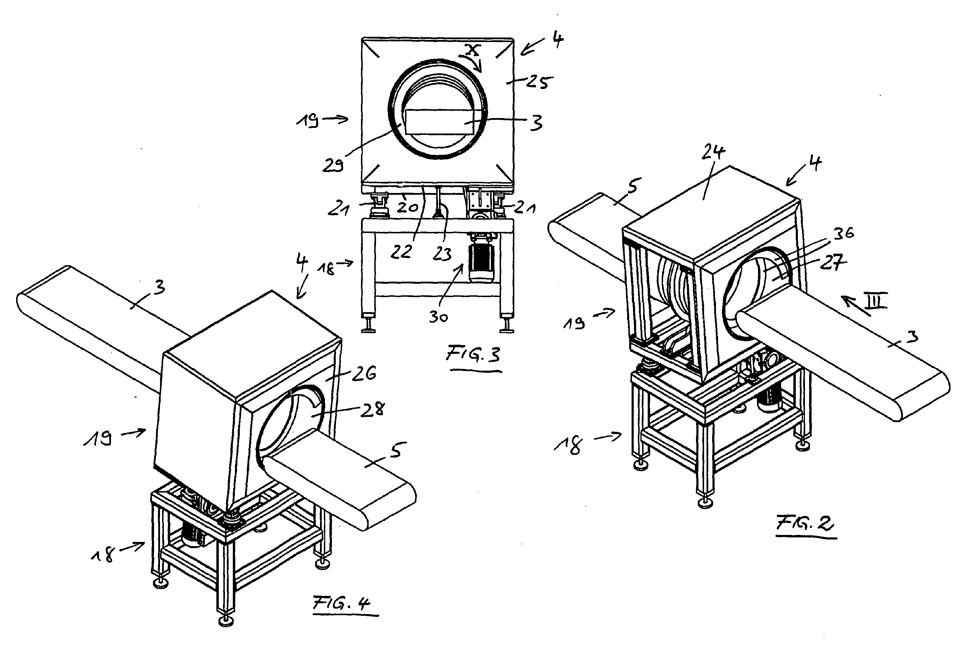

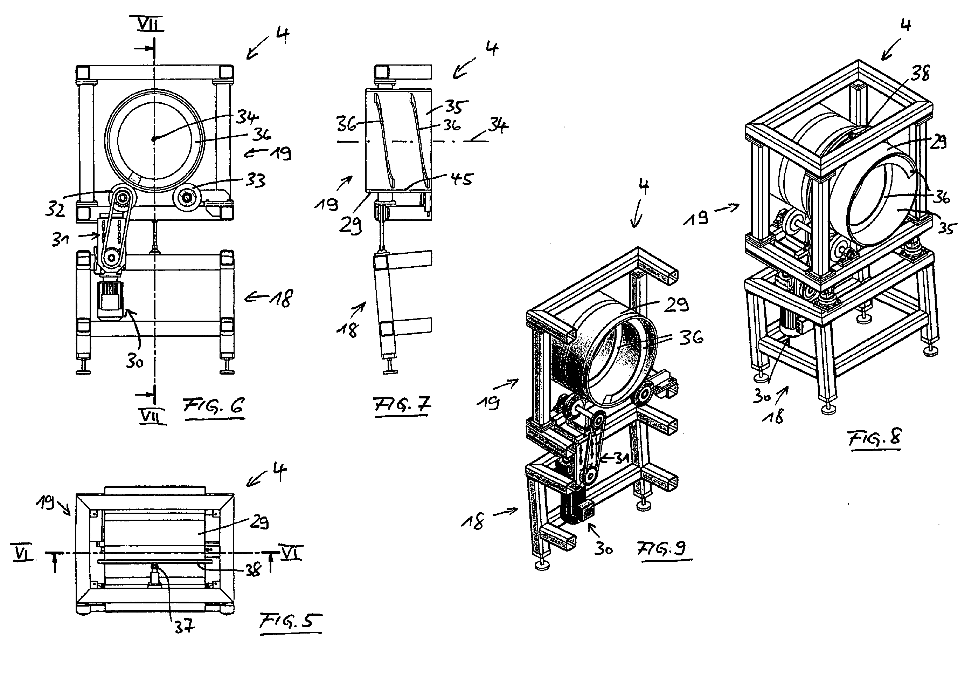

Die Beschreibung der Figuren 2 bis 9 betrifft den Bereich der Entwirrstation 4, die Figuren 2 bis 4 veranschaulichen zusätzlich das Zuführ-Förderband 3 und/oder das Abführ-Förderband 5.

Die beiden Förderbänder 3 und 5 sind horizontal angeordnet.

Die Entwirrstation 4 weist einen rahmenförmigen Ständer 18 auf, der auf dem Boden ruht, ferner einen quaderförmigen Trommelrahmen 19, der um eine untere Kante 20 des Quaders schwenkbar ist. Die Schwenklager, die den Trommelrahmen 19 im Bereich der Kante 20 aufnehmen, sind mit der Bezugsziffer 21 bezeichnet. Im Bereich der zur Kante 20 parallelen unteren Kante 22 greift ein in der Länge verstellbares Stützelement 23 am Trommelrahmen 19 an, das sich unten am Ständer 18 abstützt. Hierdurch ist eine zur Horizontalen geneigte Position des Trommelrahmens 19 vorgegeben, bezogen auf dessen untere Fläche bzw. obere Fläche 24. Die vordere Fläche 25 und die hintere Fläche 26 des Trommelrahmens 19, die durch die Kanten 20 und 22 verlaufen, sind mit zentralen kreisförmigen Öffnungen 27 und 28 versehen. Im Bereich dieser Öffnungen ist zwischen den Flächen 25 und 26 des Trommelrahmens 19 eine Trommel 29 platziert, die als Zylinder mit in seiner Länge konstantem Innendurchmesser ausgebildet ist. Das Zuführ-Förderband 3 endet geringfügig innerhalb der Trommel 29 und es schließt sich das Abführ-Förderband 5 unmittelbar an die Trommel 29 im Bereich der dortigen Öffnung 28 an.

Angetrieben wird die Trommel 29 mittels eines im Ständer 18 gelagerten Elektromotors 30, der über einen Riementrieb 31 eine im Trommelrahmen 19 gelagerte Rolle 32 antreibt, die außen an der Trommel 29 anliegt. Gegebenenfalls kann der Antrieb über mehrere Rollen 32 erfolgen. Gelagert ist die Trommel 29 auf der anderen Seite des Trommelrahmens 19 in frei drehbaren Rollen 33.

Aufgrund der beschriebenen Lagerung der Trommel 29 ist diese bezüglich ihrer Rotationsachse 34 zur Horizontalen geneigt, unter einem Winkel von beispielsweise 10°. Diese Neigung erfolgt von der höher angeordneten Öffnung 27 zur tiefer angeordneten Öffnung 28.

Mit der Innenwand 35 der Trommel 29 ist eine eingängige Förderschnecke 36 verbunden, die als sich senkrecht zur Innenwand 35 erstreckender Steg ausgebildet ist. Die Höhe dieses Steges entspricht beispielsweise 1/10 bis 1/15 des Durchmessers der Trommel 29. Die Förderschnecke 36 erstreckt sich über einen Winkel, der dem 3 ½ fachen eines Kreises entspricht, somit im Ausführungsbeispiel um einen Winkel von 1260°. Die Förderschnecke 36 hat demnach 3 ½ Windungen von vorne gesehen, d.h. in Richtung der Öffnung 27 betrachtet ist die Drehrichtung der Trommel 29 entsprechend dem Pfeil X (gemäß Figur 3). Innen ist die Trommel 29 mit einer nicht veranschaulichten geräuschdämpfenden Auskleidung versehen.

Um beim Drehen der Trommel 29 deren axiale Verlagerung zu verhindern, ist im Trommelrahmen 19 eine frei drehbare Rolle 37 gelagert, die sich an einem an der Außenseite der Trommel 29 befindlichen, umlaufenden Steg 38 abstützt.

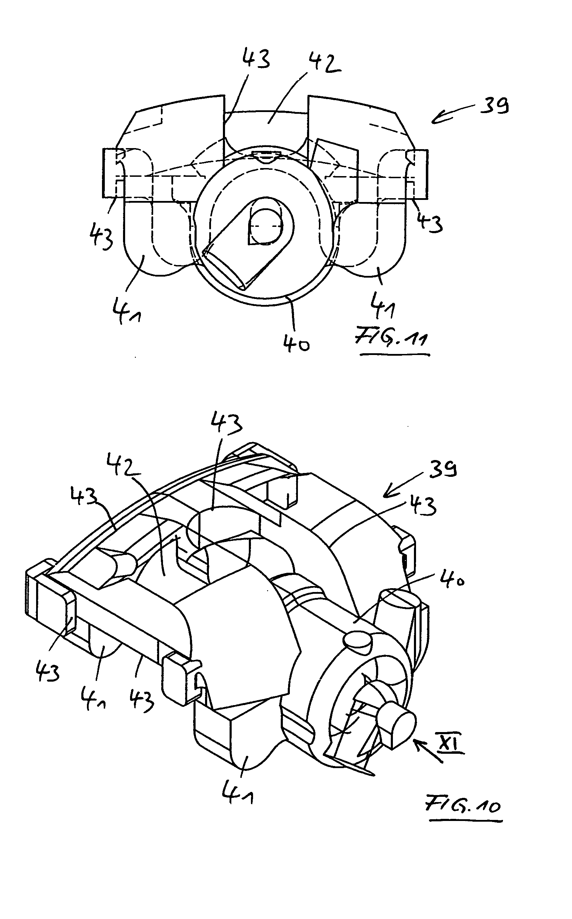

Die Figuren 10 und 11 veranschaulichen ein Rohgussteil, das als Bremsengehäuse 39 eines Personenkraftwagen ausgebildet ist und das in der in Figur 1 beschriebenen Anlage gehandhabt wird, konkret in der Entwirrstation 4 zu entwirren ist, sofern dieses Formteil mit anderen Formteilen, d.h. mit einem oder weiteren Bremsengehäusen 39 verhakt ist. Dieses Bremsengehäuse 39 dient in bekannter Art und Weise der Aufnahme der beiden Bremsbeläge, die sich an eine Bremsscheibe des Fahrzeugs anlegen. Ein im wesentlichen zylindrisch gestalteter Abschnitt 40 des Gehäuses 39 dient nach der Fertigbearbeitung des in den Figuren 10 und 11 gezeigten Rohgussteiles der Aufnahme eines Hydraulikkolbens zum Beaufschlagen der Bremsbeläge.

Wie der Darstellung dieser Figuren zu entnehmen ist, weist das Formteil 39 eine Vielzahl von Vorsprüngen, von denen nur einige Vorsprünge mit der Bezugsziffer 41 veranschaulicht sind, sowie diverse Durchbrüche 42 und hinterschnittene Kanten 43 auf, im Bereich derer sich die Bremsengehäuse 39 verhaken können.

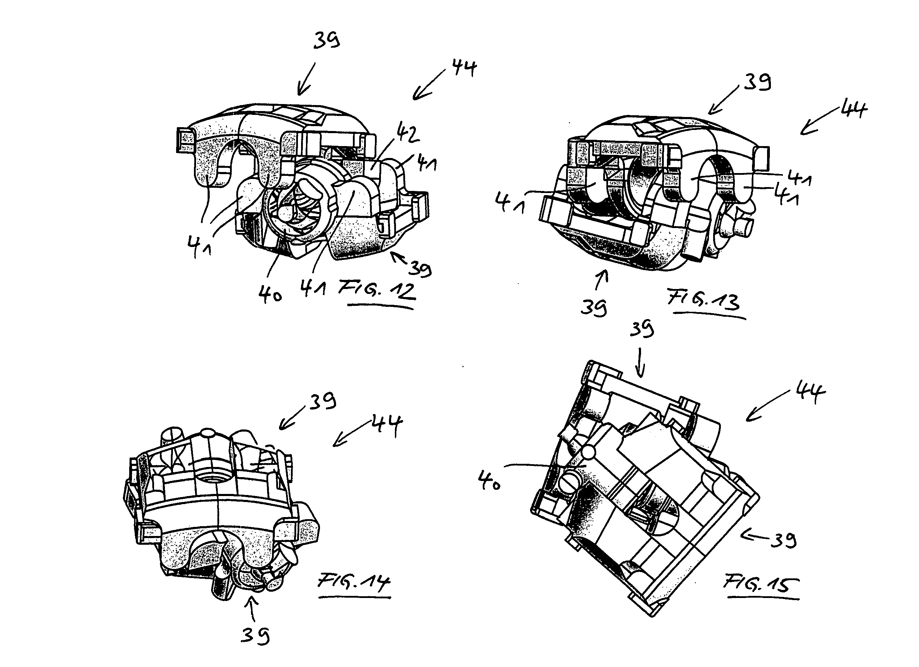

In den Figuren 12 bis 15 sind räumliche Darstellungen zweier miteinander verhakter Bremsengehäuse 39 veranschaulicht. Diesen Darstellungen ist ohne weiteres zu entnehmen, dass bezüglich der beiden Bremsengehäuse 39 ein solcher Verhakungszustand auftreten kann, dass diese nicht ohne weiteres voneinander getrennt werden können, beispielsweise indem das jeweils oben befindliche Bremsengehäuse 39 von dem unten befindlichen Bremsengehäuse 39 abgehoben wird. Zum Entwirren dieser aus den Bremsengehäusen 39 gebildeten Einheit 44 ist die Entwirrstation 4 vorgesehen.

Aus dem nicht gezeigten Container, der die Vielzahl von Bremsengehäusen 39 aufnimmt, die die Rohgussteile bilden, werden durch Kippen des Containers mittels des Container-Hebegeräts 1 möglichst präzise einzelne Einheiten 44 von Bremsengehäusen 39 auf das Zuführ-Förderband 3 ausgegeben. Die jeweilige Einheit 44 ist in aller Regel aus zwei Bremsengehäusen 39 gebildet, es sind aber auch mehr Bremsengehäuse pro Einheit 44 denkbar, insbesondere drei oder vier Bremsengehäuse 39.

Von dort gelangt die über die Einrichtungen 6 getaktete Einheit 44 in die Entwirrstation 4, wird dort in der sich drehenden Trommel 29 entwirrt und von der Trommel auf das Abführ-Förderband 5 ausgegeben. Die Bremsengehäuse 39 werden dem Kamerafeld 8 mittels des sich anschließenden Förderbandes 7 vereinzelt zugeführt und das jeweilige Bremsengehäuse 39 vom Roboter 9 ergriffen und von diesem der Wendestation 11 bzw. Ladestation 12 zwecks Weiterverarbeitung zugeführt.

## Patentansprüche

1. Verfahren zum Einwirren von ineinander verhakten Formteilen (39), insbesondere Rohrgussteilen, mit folgenden Merkmalen:
- Zuführen der Formteile (39) in eine beidendig offene Trommel (29) durch eine der beiden Trommelöffnungen (27, 28),
- Ausüben eines Impulses auf die Formteile (39) in Achsrichtung und in Tangentialrichtung der Trommel (29) durch Drehen der Trommel (29),
- Abfördern der Formteile (39) aus der Trommel (29) durch die andere der beiden Trommelöffnungen (27, 28).

2. Verfahren nach Anspruch 1, wobei die Trommel (29) um eine die beiden Öffnungen (27, 28) der Trommel (29) durchsetzende Achse, insbesondere eine rotationssymmetrische Achse (34) der Trommel (29) gedreht wird.

3. Verfahren nach Anspruch 1 oder 2, wobei die Drehzahl der Trommel (29) fünf bis zwanzig Umdrehungen pro Minute beträgt.

4. Verfahren nach einem der Ansprüche 1 bis 3, wobei die Formteile (39) mittels eines ersten Förderbandes (3) der Trommel (29) zugeführt und/oder mittels eines zweiten Förderbandes (5) aus der Trommel (29) abgeführt werden.

5. Verfahren nach einem der Ansprüche 1 bis 4, wobei die jeweilige, durch miteinander verhakte Formteile (39) gebildete Einheit (44) einzeln der Trommel (29) zugeführt wird.

6. Verfahren nach einem der Ansprüche 1 bis 5, wobei die Formteile (39) in der Trommel (29) vom höheren Aufgabeniveau der Trommel (29) auf ein niedrigeres Ausgabeniveau der Trommel (29) gefördert werden.

7. Vorrichtung zum Entwirren von ineinander verhakten Formteilen (39), insbesondere Rohgussteilen, mit folgenden Merkmalen:
- einer beidseitig offenen Trommel (29),
- einem Antrieb (30) zum Drehen der Trommel (29) um eine Trommelachse (34),
- eine mit der Innenwand (35) der Trommel (29) verbundene Förderschnecke (36) mit Förderrichtung von einer (27) der beiden Trommelöffnungen (27, 28) zu der anderen (28) der beiden Trommelöffnungen (27, 28).

8. Vorrichtung nach Anspruch 7, wobei die Trommel (29) rotationssymmetrisch ausgebildet ist.

9. Vorrichtung nach Anspruch 8, wobei die Drehachse (34) der Trommel (29) mit der rotationssymmetrischen Achse der Trommel (29) zusammenfällt.

10. Vorrichtung nach einem der Ansprüche 7 bis 9, wobei der jeweils unten befindliche, zwischen den Trommelöffnungen (27, 28) angeordnete Innenwandbereich (45) der Trommel (29) zur Horizontalen geneigt ist.

11. Vorrichtung nach einem der Ansprüche 7 bis 10, wobei die Förderschnecke (36) eingängig ist.

12. Vorrichtung nach einem der Ansprüche 7 bis 11, wobei sich der jeweilige Gang der Förderschnecke (36) über einen Winkel von 720° bis 1800°, vorzugsweise 1080° bis 1440°, insbesondere 1260° erstreckt.

13. Vorrichtung nach einem der Ansprüche 7 bis 12, wobei die Trommel (29) im Bereich der Innenwand (35) mit einer Auskleidung, insbesondere einer geräuschdämpfenden Auskleidung versehen ist.

14. Vorrichtung nach einem der Ansprüche 7 bis 13, wobei benachbart der einen Trommelöffnung (27) ein erstes Förderband (3) und/oder benachbart der anderen Trommelöffnung (28) ein zweites Förderband (5) angeordnet ist.

15. Anlage zum Zuführen von Formteilen (39), insbesondere Rohgussteilen, von einem die Formteile (39) regellos aufnehmenden Behältnis zu einer Weiterverarbeitungsstation, mit folgenden Merkmalen:
- dem Behältnis zur Aufnahme der regellos vorhandenen Formteile (39),
- Fördermitteln (3) zum Aufnehmen von aus dem Behältnis ausgegebenen Formteilen (39) und zum Übergeben dieser Formteile (39) zu einer Entwirrstation (4) zwecks Entwirren von miteinander verhakten Formteilen (39),
- Fördermitteln (5, 7, 9) zum Übernehmen der aus der Entwirrstation (4) ausgegebenen, entwirrten Formteile (39) und Zuführung dieser Formteile (39) zur Weiterverarbeitungsstation (11, 12).

16. Anlage nach Anspruch 15, wobei ein Roboter (9) zum Zuführen des jeweils vereinzelten Formteils (39) zur Weiterverarbeitungsstation (11, 12) vorgesehen ist.
